# EUROPÄISCHE PATENTSCHRIFT

(11) **EP 2 989 401 B1**
(45) Veröffentlichungstag und Bekanntmachung des Hinweises auf die Patenterteilung: **20.11.2019**
(21) Anmeldenummer: 14718375.0
(22) Anmeldetag: 15.04.2014
(51) Int. Cl.: F26B 1/00, B02C 23/24, F23K 1/04, F26B 23/00

(54) **VERFAHREN ZUR MAHLTROCKNUNG VON KOHLE**
METHOD FOR MILL DRYING COAL
PROCÉDÉ DE BROYAGE-SÉCHAGE DE CHARBON

(30) Priorität: 22.04.2013 DE 102013104032
(43) Veröffentlichungstag der Anmeldung: 02.03.2016
(73) Patentinhaber: RWE Power AG, 45128 Essen (DE)
(72) Erfinder: SCHMITZ, Hans-Peter, 50374 Erftstadt (DE)
(74) Vertreter: KNH Patentanwälte Neumann Heine Taruttis PartG mbB
(86) Internationale Anmeldenummer: PCT/EP2014/057620
(87) Internationale Veröffentlichungsnummer: WO 2014/173730

(56) Entgegenhaltungen:
- DE-A1- 4 003 499
- US-A1- 2011 220 744
- BOCKER D ET AL: "VERFAHREN ZUR TROCKNUNG UND MAHLUNG VON BRAUNKOHLE", BWK BRENNSTOFF WARME KRAFT, SPRINGER VDI VERLAG, DUSSELDORF, DE, Bd. 44, Nr. 7 / 08, 1. Juli 1992 (1992-07-01), Seiten 315-316,317, XP000291932, ISSN: 1618-193X

## Beschreibung

Gegenstand der vorliegenden Erfindung ist ein Verfahren zur Mahltrocknung von Kohle, mit dem Kohle auf eine vorgebbare Korngrößenverteilung gemahlen wird und gleichzeitig der Wasseranteil in der Kohle reduziert werden kann. Bevorzugtes Einsatzgebiet der vorliegenden Erfindung ist die Herstellung von Kohlenstaub, insbesondere Braunkohlenstaub.

Kohlenstaub, insbesondere Braunkohlenstaub, wird industriell als Brennstoff eingesetzt, beispielsweise zur Herstellung von Zement. Für die Herstellung solchen Kohlenstaubs ist aufgrund des Wassergehalts von Rohbraunkohle die Trocknung und Zerkleinerung der Rohbraunkohle erforderlich. Hierzu können Röhrentrockner eingesetzt werden, wie sie beispielsweise aus der DE 33 04 39 C bekannt sind. Alternativ können Wirbelschichttrockner eingesetzt werden, wie sie beispielsweise aus der WO 2010/057509 A1 bekannt sind. Zur Zerkleinerung kommen üblicherweise Rohrschwingmühlen wie aus der DE 25 22 610 A1 bekannt oder Walzenschüsselmühlen zum Einsatz, wie sie beispielsweise aus der WO 2011/131278 A1 bekannt sind. Insbesondere bei Walzenschüsselmühlen ist auch bekannt, gleichzeitig bei der Mahlung auch eine Trocknung des Mahlguts vorzunehmen. Hierzu wird üblicherweise Rauchgas als Förderluft für die Walzenschüsselmühle verwendet. Dieses heiße Gas muss im Regelfall separat erzeugt werden. Weiterhin ist aus der DE 40 03 499 A1 eine Vorrichtung zur Trocknung, Mahlung und Verbrennung von Rohbraunkohle bekannt, bei der in einem Wirbelschichttrockner anfallende Brüden einer Mühle zugeführt werden.

Hiervon ausgehend liegt der vorliegenden Erfindung die Aufgabe zugrunde, die aus dem Stand der Technik bekannten Nachteile zumindest teilweise zu überwinden und insbesondere ein Verfahren zur Mahltrocknung von Kohle anzugeben, bei dem eine energetisch effiziente Verfahrensführung möglich ist.

Diese Aufgabe wird gelöst durch ein Verfahren mit den Merkmalen des Anspruchs 1. Die abhängigen Ansprüche sind auf vorteilhafte Weiterbildungen gerichtet.

Das erfindungsgemäße Verfahren zur Mahltrocknung von Kohle umfasst die folgenden Schritte:
a) Vortrocknung der Kohle bis zu einem vorgebbaren ersten Feuchtegrad in einem Vortrockner und
b) Mahlen der Kohle bis zu einer vorgebbaren Korngrößenverteilung in einer Mühle,
wobei eine wasserdampfhaltige Abluft der Vortrocknung zur weiteren Trocknung der Kohle bis zu einem vorgebbaren zweiten Feuchtegrad der Mühle zugeführt wird und wobei zumindest ein Teil der Abluft des Vortrockners vor Zuführung zur Mühle mit Frischluft versetzt wird.

Unter Kohle wird hier insbesondere Braunkohle verstanden. Die Kohle wird bevorzugt als Rohkohle, gegebenenfalls grob zerkleinert, insbesondere mit Korngrößen von etwa 6 mm [Millimeter], der Vortrocknung im Vortrockner zugeführt. Aufgrund des relativ hohen Wasseranteils der Kohle, beispielsweise bei Rohbraunkohle im Bereich von bis zu 60 Massen-% ist eine Trocknung der Kohle unerlässlich. Hierbei verdampft zumindest ein Teil des Wassers in der Kohle, so dass Wasserdampf entsteht, der im Abgas der Trocknung, dem Brüden, enthalten ist.

Üblicherweise wird die Kohle zunächst getrocknet und dann gemahlen. Unter dem Begriff Mahlen wird die mechanische Zerkleinerung der Kohle, insbesondere in Mahlwerken, verstanden. Durch die Zuführung der wasserdampfhaltigen Abluft der Vortrocknung - des Brüdens - zur Mühle erfolgt eine weitere Trocknung der Kohle in der Mühle unter Ausnutzung der thermischen Energie der Abluft des Vortrockners. Der Wasserdampf beruht überwiegend auf der Verdampfung des Wassers in der Kohle während der Vortrocknung. Durch die Zuführung von Frischluft wird der Sauerstoffanteil in der Abluft erhöht. Allerdings ist dabei zu beachten, dass ein zu hoher Sauerstoffanteil, insbesondere von mehr als 12 Vol.-% [Volumen-%], in der Abluft vermieden wird, da dadurch die Explosionsgefahr in der Mühle beim Mahlen von Kohle steigt. Durch die Nutzung der Abluft und damit auch der Abwärme der Vortrocknung zur weiteren Trocknung im Rahmen der Mahlung wird ein effizienter und energetisch günstigerer Mahltrocknungsprozess für Kohle erreicht. Insbesondere ist eine Verfahrensführung möglich, bei der im Vortrockner nur bis zu einem im Vergleich zu aus dem Stand der Technik bekannten Verfahren relativ hohen Wassergehalt getrocknet wird und dann im Rahmen des Mahlvorgangs die Resttrocknung bis zum gewünschten zweiten Feuchtegrad durchgeführt wird. Dadurch kann die Verweilzeit im Vortrockner im Vergleich zu einer Trocknung im Vortrockner bis zum zweiten Feuchtegrad deutlich reduziert und damit der Durchsatz durch das Gesamtsystem aus Vortrockner und Mühle erhöht werden.

Gemäß einer vorteilhaften Ausgestaltung des Verfahrens wird als Vortrockner ein Röhrentrockner eingesetzt.

Unter einem Röhrentrockner wird üblicherweise ein Trockner verstanden, der ein Drehrohr, also eine um eine Drehachse drehbare Trommel umfasst. Die Drehachse ist dabei üblicherweise zur horizontalen geneigt. Die Trommel ist bevorzugt an beiden Stirnseiten durch einen Rohrboden verschlossen. Diese Rohrböden werden in Richtung der Drehachse durch eine Vielzahl von Röhren verbunden und werden von außen, beispielsweise durch heißen Wasserdampf, beheizt. Durch Rotation der Trommel um die Drehachse wird die Kohle durch die Röhren transportiert. Aufgrund des im nachgeschalteten Schlot, insbesondere einem Elektrofilterschlot, entstehenden Kaminzugs wird durch die Röhren Außenluft angesaugt, die die Kohle umströmt und sich sukzessive aufheizt. Hierbei nimmt dieser Heißgasstrom das verdampfende Wasser aus der Kohle auf und verlässt als Brüden die Röhren. Der Einsatz eines Röhrentrockners hat den Vorteil, dass die Abluft, der Brüden, des Röhrentrockners üblicherweise einen relativ hohen Anteil an Luft aufweist, der zur weiteren Trocknung in der Mühle eingesetzt werden kann. Sauerstoffgehalte von bis zu ca. 10 % in Brüden von Röhrentrocknern sind üblich. Im Volllastbetrieb führt dies zu einer Inertisierung des Brüden-Staub-Gemisches.

Alternativ kann als Vortrockner ein Wirbelschichttrockner eingesetzt werden.

In einem Wirbelschichttrockner wird eine Wirbelschicht aus den Kohlepartikeln und gegebenenfalls weiteren Fluidisierungspartikeln wie beispielsweise Sand gebildet, in dem eine entsprechende Schüttung der Partikel durch eine aufwärtsgerichtete Strömung eines Fluids, beispielsweise eines Rauchgases, Luft und/oder Wasserdampf fluidisiert. In der Wirbelschicht kommt es zu einem intensiven Kontakt zwischen dem Fluid und den Partikeln, so dass eine effektive Trocknungsleistung erreicht werden kann. In Bezug auf die genaue Ausbildung und Betriebsweise des Wirbelschichttrockners wird hierbei auf die Veröffentlichung "Stand der Entwicklung der WTA-Wirbelschichttrocknung für Braunkohle bei der RWE Power AG" von Dr. H. Klutz, C. Moser und D. Block, erschienen in "Kraftwerkstechnik - Sichere und nachhaltige Energieversorgung", Herausgeber M. Beckmann und A. Hurtado, TK-Verlag, Band 2, Oktober 2010, S. 427 bis 444 Bezug genommen. Beim Einsatz eines Wirbelschichttrockners ist der Brüden üblicherweise mit mehr Wasserdampf versehen als in Röhrentrocknern, hier sind Wasserdampfanteile von bis zu 98 % möglich. Hier kann es vorteilhaft sein, dem Brüden Frischluft zuzuführen, um eine erhöhte Trocknungskapazität der Abluft in der Mühle zu ermöglichen.

Gemäß einer weiteren vorteilhaften Ausgestaltung wird die Zufuhr der Frischluft so geregelt, dass der Sauerstoffanteil des Gemischs der Abluft und der Frischluft höchstens 12 Vol.-% beträgt.

Beim Begrenzen der Frischluftzufuhr so, dass maximal 12 Vol.-% Sauerstoff im Gasgemisch bei Eintritt in die Mühle vorhanden sind, kann das Explosionsrisiko signifikant verringert und insbesondere eine Explosion vermieden werden.

Gemäß einer weiteren vorteilhaften Ausgestaltung des Verfahrens wird die Temperatur zumindest eines Teils der Abluft des Vortrockners vor Zuführung zur Mühle erhöht.

Hierbei kann die Temperatur der Abluft, beziehungsweise des Gasgemischs aus Abluft und Frischluft, vor Zuführung in die Mühle so eingestellt werden, dass beim bekannten Durchsatz durch die Mühle ein entsprechender Feuchtegrad der Kohle beim Verlassen der Mühle erreicht werden kann.

Gemäß einer weiteren vorteilhaften Ausgestaltung wird zumindest ein Teil der Abluft des Vortrockners vor Zuführung zur Mühle zur Erhöhung der Temperatur durch einen Wärmetauscher geführt.

Hierbei erfolgt also eine Erhöhung der Temperatur auf indirektem Wege, indem mit einem Wärmemedium, welches eine höhere Temperatur aufweist als die Abluft, durch einen indirekten Wärmetauscher und einen Wärmetauscher, beispielsweise in einem Röhrenwärmetauscher, eine Erhöhung der Temperatur der Abluft erfolgt.

Gemäß einer vorteilhaften Ausgestaltung kann hierbei Wasserdampf mit einer höheren Temperatur als der Temperatur der Abluft durch den Wärmetauscher geführt werden.

Da üblicherweise in Kraftwerken und bei der Herstellung von Kohlenstaub Heißdampf verfügbar ist, kann so auf einfache Art und Weise eine Aufheizung oder Überhitzung der Abluft erfolgen. Hierdurch wird die Trocknungsleistung der Abluft in der Mühle weiter erhöht.

Gemäß einer weiteren vorteilhaften Ausgestaltung kann bei zumindest einem Teil der Abluft vor Zuführung zur Mühle Wasserdampf einer höheren Temperatur zugeführt werden.

So ist eine Erhöhung der Temperatur der Abluft auf einfache Art und Weise möglich. Gleichzeitig ist es so möglich, den Sauerstoffanteil in der Abluft zu senken, falls dieser für die gewünschten Trocknungseffekte zu hoch sein sollte, und/oder eine Inertisierung der Abluft zu erreichen.

Gemäß einer vorteilhaften Ausgestaltung des Verfahrens wird als Mühle eine Walzenschüsselmühle eingesetzt.

Bei einer Walzenschüsselmühle, die auch als Vertikalmühle bezeichnet wird, liegt üblicherweise ein rotierender Mahlteller - die Schüssel - vor, auf den die Mahlwerkzeuge, beispielsweise Kugeln, zylindrische, keglige oder ballige Walzen, durch ihr Eigengewicht und gegebenenfalls unter zusätzlicher Kraft, beispielsweise durch Hydraulikzylinder, angepresst werden. Durch die in der Walzenschüsselmühle vorliegende Fliehkraft wird die zentrisch aufgegebene Kohle zum Mahltellerrand getrieben und auf dem Weg dorthin von den Mahlwerkzeugen erfasst, überrollt und dadurch zerkleinert. Beim Mahlvorgang wird systembedingt ein Gasstrom durch die Mühle geführt, der vorteilhafterweise im Rahmen der vorliegenden Erfindung zur Nachtrocknung genutzt werden kann, so dass hier die Abluft der Vortrocknung zum Einsatz kommt. So lässt sich das erfindungsgemäße Prinzip der Nutzung der Wärme des Brüdens der Vortrocknung besonders einfach umsetzen. In Bezug auf die genaue Ausbildung und Betriebsweise der Walzenschüsselmühle wird hierbei auf das Buch "Kraftwerkstechnik" von K. Strauß, 5. Aufl., Springer Verlag, 2006, S. 144 bis 145 Bezug genommen.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: ein erstes Ausführungsbeispiel einer Verfahrensführung zur Mahltrocknung von Kohle; und
- Fig. 2:: ein zweites Beispiel einer Verfahrensführung zur Mahltrocknung von Kohle.

Die Vorrichtung 1 umfasst einen Vortrockner 2. In diesen Vortrockner 2 wird Rohbraunkohle 3 eingegeben. Im Vortrockner 2, der beispielsweise einen Röhrentrockner oder einen Wirbelschichttrockner umfasst, erfolgt eine Vortrocknung der Rohbraunkohle 3 auf einen vorgebbaren ersten Feuchtegrad. Die vorgetrocknete Braunkohle 4 verlässt den Vortrockner, beispielsweise mit einem Feuchtegrad von Massen-15 %. Diese vorgetrocknete Braunkohle 4 wird dann einer Walzenschüsselmühle 5 zugeführt. Alternativ zur Walzenschüsselmühle ist auch der Einsatz anderer Mühlen, möglich, wie beispielsweise von Rohrschwingmühlen. Die Walzenschüsselmühle 5 wird dabei mit einem Fördergasstrom betrieben, der zumindest teilweise die Abluft 6, den Brüden des Vortrockners 2 umfasst. Die Abluft 6 wird hier in diesem Ausführungsbeispiel einem Wärmetauscher 7 zugeführt. Durch diesen Wärmetauscher 7 strömt gleichzeitig Wasserdampf 8, der eine höhere Temperatur aufweist als die Temperatur der Abluft 6 beim Eintreten in den Wärmetauscher 7. Beispielsweise weist die Abluft des Vortrockners 2 eine Temperatur von etwa 100 °C und einen Druck von etwa 1 bar auf. Der Wasserdampf 8 wird beispielsweise mit einer Temperatur von etwa 300 °C bei einem Druck von 17 bar oder mit einer Temperatur von 180 °C bei einem Druck von 5 bar zugeführt. Dadurch wird die Temperatur der Abluft 6 beim Passieren des Wärmetauschers 7 erhöht. Alternativ oder zusätzlich kann im Wärmetauscher 7 auch eine Vermischung der Abluft des Vortrockners 2 mit Frischluft erfolgen. Kondensat 9 wird aus dem Wärmetauscher 7 abgeführt. Die erhitzte Abluft 10 verlässt den Wärmetauscher 7 und wird mit Frischluft 11 vermischt. Diese hat üblicherweise eine Temperatur im Bereich von etwa -10 bis 30 °C und liegt bei einem Druck von etwa 1 bar vor. Die Zumischung der Frischluft 11 erfolgt dabei so, dass das entstehende Gemisch, welches der Walzenschüsselmühle 5 zugeführt wird, eine Temperatur im Bereich von beispielsweise etwa 120 bis 150 °C bei einem Druck von 1 bar und vor allen Dingen einen Sauerstoffgehalt von weniger als 12 Vol.-%, besonders bevorzugt von 10-Vol.-% und weniger aufweist. Hierbei wird die Temperatur so geregelt, dass der vorgebbare zweite Feuchtegrad der gemahlenen Braunkohle 12 beim Verlassen der Walzenschüsselmühle 5 erreicht wird. In einem Staubabscheider 13 erfolgt eine Abscheidung des entsprechenden Staubs. Dieser weist beispielsweise einen zweiten Feuchtegrad von etwa 12 % und eine Temperatur von etwa 90 °C auf. Dieser Braunkohlenstaub 14 wird einer Staubkühlung 15 zugeführt. In dieser wird die entsprechende Braunkohle auf eine Temperatur von weniger als 60 °C, bevorzugt auf eine Temperatur von etwa 50 °C abgekühlt und kann dann als verladefähiger Braunkohlenstaub 16 verladen oder in Bunkern gelagert werden. Eine Abluft 17 der Staubabscheidung 13 wird über ein Saugzuggebläse 18 unter Einhaltung der zulässigen Staubkonzentration an die Atmosphäre abgegeben oder einer weiteren thermischen Nutzung zugeführt. Beispielsweise kann die Abluft 17 nach Passieren des Saugzuggebläses 18 in einem entsprechenden Wärmetauscher 19 zur Aufheizung anderer Medien eingesetzt werden. Entsprechend kann das Kondensat 20 abgeführt werden.

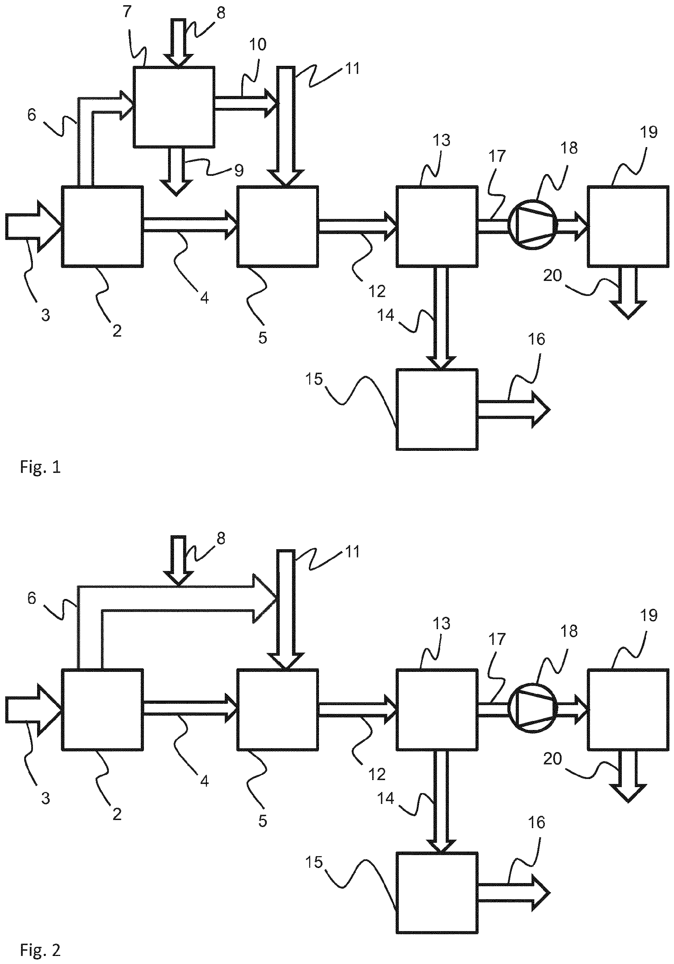

Die Ausführungsvariante in Fig. 2 unterscheidet sich nur geringfügig von dem ersten Beispiel, von daher wird auf die Ausführungen zum ersten Beispiel in Fig. 1 Bezug genommen, gleiche Elemente sind mit gleichen Bezugszeichen versehen. Im Unterschied zum ersten Beispiel wird im zweiten Beispiel die Abluft 6 des Vortrockners 2 nicht über einen Wärmetauscher geführt, vielmehr wird direkt Wasserdampf 8 und später Frischluft 11 zugeführt. So kann der Wasserdampfanteil in dem Gemisch aus Abluft 6 und Wasserdampf 8 erhöht werden, so dass gegebenenfalls ein inertes Gasgemisch erhalten wird, welches der Walzenschüsselmühle 5 zugeführt werden kann.

Beispielhaft ist auch hier eine Verfahrensführung, bei der die vorgetrocknete Braunkohle einen ersten Feuchtegrad von 15 % und eine Temperatur von etwa 60 bis 70 °C aufweist und dann ein Luft-Wasserdampf-Gemisch mit einer Temperatur im Bereich von beispielsweise 120 bis 150 °C und einem Druck von 1 bar und einem Sauerstoffanteil von weniger als 12 Vol.-% der Walzenschüsselmühle 5 zugeführt wird. Eine weitere Alternative besteht darin, Frischluft mit Wasserdampf zu mischen und diesen dann der Walzenschüsselmühle 5 zuzuführen.

Das hier beschriebene Verfahren zur Mahltrocknung hat den Vorteil, dass bei bereits existierenden Vortrocknern 2 und Mühlen wie beispielsweise Walzenschüsselmühlen 5 der Durchsatz des Gesamtsystems aus Vortrocknern 2 und Walzenschüsselmühlen 5 signifikant erhöht werden kann, da der Durchgang und damit die Verweildauer durch den Vortrockner 2, unabhängig davon, ob es sich um einen Röhrentrockner oder einen Wirbelschichttrockner handelt, verkürzt werden kann, wenn der vorgebbare erste Feuchtegrad nach Verlassen des Vortrockners 2 höher sein kann als wenn in der bestehenden Walzenschüsselmühle 5 lediglich gemahlen und die gesamte Trocknung im Vortrockner 2 durchgeführt wird. So lässt sich die Kapazität des Gesamtsystems und damit der Durchsatz und der Ausstoß an Braunkohlenstaub erhöhen. Zudem kann durch die Nutzung der Abwärme des Vortrockners 2 durch die Nutzung der Abluft 6 beziehungsweise des Brüdens eine energetisch effizientere Verfahrensführung erreicht werden, die eine Verminderung des notwendigen Energieeinsatzes bedeutet.

### Bezugszeichenliste

- 1: Vorrichtung zur Mahltrocknung
- 2: Vortrockner
- 3: Rohbraunkohle
- 4: vorgetrocknete Braunkohle
- 5: Walzenschüsselmühle
- 6: Abluft
- 7: Wärmetauscher
- 8: Wasserdampf
- 9: Kondensat
- 10: erhitzte Abluft
- 11: Frischluft
- 12: gemahlene Braunkohle
- 13: Staubabscheider
- 14: Braunkohlenstaub
- 15: Staubkühlung
- 16: verladefertiger Braunkohlenstaub
- 17: Abluft
- 18: Saugzuggebläse
- 19: Wärmetauscher
- 20: Kondensat

## Patentansprüche

1. Verfahren zur Mahltrocknung von Kohle, umfassend die folgenden Schritte:
a) Vortrocknung der Kohle bis zu einem vorgebbaren ersten Feuchtegrad in einem Vortrockner (2) und
b) Mahlen der Kohle bis zu einer vorgebbaren Korngrößenverteilung in einer Mühle,
wobei eine wasserdampfhaltige Abluft (6) der Vortrocknung zur weiteren Trocknung der Kohle bis zu einem vorgebbaren zweiten Feuchtegrad der Mühle zugeführt wird, **dadurch gekennzeichnet. dass** zumindest ein Teil der Abluft (6) des Vortrockners (2) vor Zuführung zur Mühle mit Frischluft (11) versetzt wird.

2. Verfahren nach Anspruch 1, bei dem als Vortrockner (2) ein Röhrentrockner eingesetzt wird.

3. Verfahren nach Anspruch 1, bei dem als Vortrockner (2) ein Wirbelschichttrockner eingesetzt wird.

4. Verfahren nach Anspruch 41, bei dem die Zufuhr der Frischluft (11) so geregelt wird, dass der Sauerstoffanteil des Gemisches der Abluft (6) und der Frischluft (11) höchstens 12 Vol.-% beträgt.

5. Verfahren nach einem der vorhergehenden Ansprüche, bei dem die Temperatur zumindest eines Teils der Abluft (6) des Vortrockners (2) vor Zuführung zur Mühle erhöht wird.

6. Verfahren nach einem der vorhergehenden Ansprüche, bei dem zumindest ein Teil der Abluft (6) des Vortrockners (2) vor Zuführung zur Mühle zur Erhöhung der Temperatur durch einen Wärmetauscher (7) geführt wird.

7. Verfahren nach Anspruch 6, bei dem ein Wasserdampf (8) einer höheren Temperatur als der Temperatur der Abluft (6) durch den Wärmetauscher (7) geführt wird.

8. Verfahren nach einem der vorhergehenden Ansprüche, bei dem zumindest einem Teil der Abluft (6) vor Zuführung zur Mühle Wasserdampf (8) einer höheren Temperatur zugeführt wird.

9. Verfahren nach einem der vorhergehenden Ansprüche, bei dem als Mühle eine Walzenschüsselmühle (5) eingesetzt wird.

## Claims

1. Method for mill-drying coal, comprising the following steps:
a) pre-drying the coal to a predeterminable first moisture level in a pre-dryer (2) and
b) milling the coal to a predeterminable particle size distribution in a mill,
exhaust air (6), containing water vapor, from the pre-drying process being supplied to the mill for further drying the coal to a predeterminable second moisture level, **characterized in that** at least some_of the exhaust air (6) from the pre-dryer (2) is mixed with fresh air (11) before being supplied to the mill.

2. Method according to claim 1, wherein a tubular dryer is used as the pre-dryer (2).

3. Method according to claim 1, wherein a fluid bed dryer is used as the pre-dryer (2).

4. Method according to claim 1, wherein the supply of the fresh air (11) is controlled in such a way that the oxygen content of the mixture of the exhaust air (6) and the fresh air (11) is 12 vol.% at most.

5. Method according to any of the preceding claims, wherein the temperature of at least some of the exhaust air (6) from the pre-dryer (2) is increased before being supplied to the mill.

6. Method according to any of the preceding claims, wherein at least some of the exhaust air (6) from the pre-dryer (2) is guided through a heat exchanger (7), before being supplied to the mill, so as to increase the temperature.

7. Method according to claim 6, wherein water vapor (8) having a higher temperature than the temperature of the exhaust air (6) is guided through the heat exchanger (7).

8. Method according to any of the preceding claims, wherein water vapor (8) having a higher temperature is supplied to at least some of the exhaust air (6) before said exhaust air is supplied to the mill.

9. Method according to any of the preceding claims, wherein a bowl mill (5) is used as the mill.

## Revendications

1. Procédé de broyage-séchage de charbon, comprenant les étapes suivantes :
a) le pré-séchage du charbon à un premier degré d'humidité prédéfinissable dans un pré-séchoir (2) et
b) le broyage du charbon jusqu'à une distribution granulométrique prédéfinie dans un broyeur,
de l'air évacué (6) contenant de la vapeur d'eau du pré-séchage destinée à sécher davantage le charbon étant amené à un second degré d'humidité prédéfini du broyeur, **caractérisé en ce qu'**au moins une partie de l'air évacué (6) du pré-séchoir (2) est mélangée à de l'air frais (11) avant d'être amenée au broyeur.

2. Procédé selon la revendication 1, dans lequel un séchoir à tubes est utilisé comme pré-séchoir (2).

3. Procédé selon la revendication 1, dans lequel un séchoir à lit fluidisé est utilisé comme pré-séchoir (2).

4. Procédé selon la revendication 1, dans lequel l'amenée d'air frais (11) est réglée de sorte que la teneur en oxygène du mélange d'air évacué (6) et d'air frais (11) s'élève au plus à 12 % en volume.

5. Procédé selon l'une des revendications précédentes, dans lequel la température d'au moins une partie de l'air évacué (6) du pré-séchoir (2) est augmentée avant l'amenée au broyeur.

6. Procédé selon l'une des revendications précédentes, dans lequel au moins une partie de l'air évacué (6) du pré-séchoir (2) passe par un échangeur de chaleur (7) avant d'être amenée au broyeur afin d'augmenter la température.

7. Procédé selon la revendication 6, dans lequel une vapeur d'eau (8) d'une température supérieure à la température de l'air évacué (6) passe par l'échangeur thermique (7).

8. Procédé selon l'une des revendications précédentes, dans lequel au moins une partie de l'air évacué (6) est alimentée en vapeur (8) à une température supérieure avant d'être amenée au broyeur.

9. Procédé selon l'une des revendications précédentes, dans lequel un broyeur à galets (5) est utilisé comme broyeur.
